# EUROPÄISCHE PATENTSCHRIFT

(11) **EP 0 927 219 B1**
(45) Veröffentlichungstag und Bekanntmachung des Hinweises auf die Patenterteilung: **28.02.2001**
(21) Anmeldenummer: 97943874.4
(22) Anmeldetag: 19.09.1997
(51) Int. Cl.: C08J 3/03, D04H 1/00, C08L 67/00, C08L 75/06, C08L 77/12

(54) **WÄSSRIGE DISPERSION EINES BIOLOGISCH ABBAUBAREN POLYESTERS SOWIE DEREN VERWENDUNG**
AQUEOUS DISPERSION OF A BIODEGRADABLE POLYESTER AND ITS USE
DISPERSION AQUEUSE D'UN POLYESTER BIODEGRADABLE ET SON UTILISATION

(30) Priorität: 20.09.1996 DE 19638686
(43) Veröffentlichungstag der Anmeldung: 07.07.1999
(73) Patentinhaber: BASF AKTIENGESELLSCHAFT, 67056 Ludwigshafen (DE)
(72) Erfinder: YAMAMOTO, Motonori, D-68199 Mannheim (DE); WARZELHAN, Volker, D-67273 Weisenheim (DE); SEELIGER, Ursula, D-67059 Ludwigshafen (DE); NGUYEN KIM, Son, D-69502 Hemsbach (DE); SCHUMACHER, Karl-Heinz, D-67433 Neustadt (DE); HUMMERICH, Rainer, D-67551 Worms (DE); BEIMBORN, Dieter, Bernhard, D-67273 Weisenheim (DE); PAGGA, Udo, D-67069 Ludwigshafen (DE)
(86) Internationale Anmeldenummer: EP9705155
(87) Internationale Veröffentlichungsnummer: WO9812245

(56) Entgegenhaltungen:
- EP-A- 0 332 980
- EP-A- 0 498 156
- EP-A- 0 520 266
- WO-A-93/07198
- CA-A- 2 057 669
- DE-A- 4 121 085
- DE-A- 4 440 858
- US-A- 3 546 008
- US-A- 4 052 368
- US-A- 5 543 488

## Beschreibung

Die vorliegende Erfindung betrifft eine Polyesterdispersion enthaltend Wasser und einen biologisch abbaubaren, aliphatisch-aromatischen Copolyester, ein Verfahren zu deren Herstellung sowie deren Verwendung als Bindemittel für Vliesstoffe und zur Beschichtung von Papier. Ferner betrifft die vorliegende Erfindung den unter Verwendung der erfindungsgemäßen Polyesterdispersion hergestellten Vliesstoff an sich, ein Verfahren zu dessen Herstellung sowie dessen Verwendung.

Die innerhalb der erfindungsgemäßen wäßrigen Polyesterdispersion eingesetzten biologisch abbaubaren Copolyester, die wiederkehrende Einheiten enthalten, die sich sowohl von aromatischen Carbonsäure(derivate)n als auch von aliphatischen Carbonsäure(derivate)n ableiten, sind an sich bekannt.

So beschreibt die US 5 446 079 sowie die parallele internationale Anmeldung WO 92/09654 einen linearen, statistischen, semikristallinen aliphatisch-aromatischen Copolyester mit einer Grenzviskositätszahl von ungefähr 0,5 bis 1,8 dl/g, gemessen in Phenol/Tetrachlorethan (Gew.-Verhältnis 60/40) bei einer Konzentration von 0,5 g/100 ml und bei einer Temperatur von 25 °C, wobei der Anteil der Einheiten, die von aromatischen Carbonsäuren abgeleitet sind, 5 bis 65 mol-%, und der Anteil an wiederkehrenden Einheiten, die von aliphatischen Carbonsäuren abgeleitet sind, 95 bis 35 mol-%, jeweils bezogen auf die Gesamtmenge der wiederkehrenden Einheiten, die sich von Carbonsäuren ableiten, beträgt. Dort werden sowohl die biologische Abbaubarkeit derartiger Polyester sowie deren Verwendung als Formkörper, Folien, usw. beschrieben.

In der DE-A-44 32 161 werden biologisch abbaubare Polyester, die in natürlicher Umgebung und unter Einwirkung von Mikroorganismen abgebaut werden, beschrieben, die (a) aus einem aliphatischen Polyol und einem aromatischen Polyol und einer aliphatischen Polycarbonsäure oder (b) aus einem aliphatischen Polyol, ggf. neben einem aromatischen Polyol, und einer aromatischen Polycarbonsäure als auch gleichzeitig einer aliphatischen Polycarbonsäure oder (c) aus einer aromatischen Hydroxymonocarbonsäure und einer aliphatischen Hydroxymonocarbonsäure als Monomerkomponenten kondensiert worden sind, wobei jeweils die auf die Monomerkomponenten zurückgehenden Einheiten statistisch oder alternierend angeordnet sind.

Darüber hinaus werden die hier im Rahmen der vorliegenden Erfindung verwendeten biologisch abbaubaren Polyester an sich ebenfalls in einer Reihe von Anmeldungen der Anmelderin selbst beschrieben (DE-A 44 40 858, DE-A 44 40 850, DE-A 44 40 837, DE-A 44 40 836, DE-A 195 00 757, DE-A 195 00 756, DE-A 195 00 755, DE-A 195 00 754, DE-A 195 05 185, DE-A 195 05 186).

In all diesen Druckschriften werden jedoch keine Polyesterdispersionen unter Verwendung dieser Polyester beschrieben.

Polyesterdispersionen und deren Herstellung sind an sich ebenfalls bekannt (s. u.a. US 3 546 008, EP-A-0 332 980 sowie EP-A-0 498 156). So beschreibt die US 3 546 008 mit Schlichtemittel behandelte faserförmige Erzeugnisse, wobei das Schlichtemittel einen linearen, sich in Wasser verteilenden Polyester umfaßt. Dieser wird ausgehend von mindestens einer Carbonsäure, mindestens einem Diol, wobei mindestens 20% des Diols Polyethylenglykol sind, und einem eine SO₃M-Gruppe, wobei M Wasserstoff oder ein Metallion ist, aufweisenden Monomer hergestellt. Copolyester der hier in Rede stehenden Art werden in dieser Druckschrift nicht erwähnt. In den Beispielen werden lediglich Polyester, die sich aus aromatischen Carbonsäuren und einem Diol ableiten, beschrieben. Derartige Polyester weisen jedoch keine biologische Abbaubarkeit auf.

Die EP-A-0 332 980 betrifft ein Verfahren zur Herstellung von wäßrigen Polyesterdispersionen durch Kondensieren von aromatischen Dicarbonsäuren oder deren Ester mit mindestens einem Diol zu Präpolymeren mit einer Säurezahl von 2 bis 8. Anschließend werden diese Präpolymeren mit mindestens einer molekulargewichtserhöhenden Verbindung zu Polyestern mit Säurezahlen von 40 bis 60 umgesetzt und der Polyester durch Zusatz wäßriger Mischungen aus Ammoniak und Aminen im Molverhältnis von 10:1 bis 1:10 zu einer Polyesterschmelze, die eine Temperatur im Bereich von 150 bis 210 °C aufweist, dispergiert. Ferner betrifft die Anmeldung die Verwendung dieser Polyesterdispersionen als Schlichtemittel zum Schlichten von Filamentkettfäden. Auch in dieser Entgegenhaltung werden lediglich Polyester auf der Basis von aromatischen Dicarbonsäuren verwendet, deren mechanische Eigenschaften zwar ausgezeichnet sind, die jedoch praktisch keine biologische Abbaubarkeit aufweisen.

Die EP-A-0 498 156 beschreibt wäßrige Polyester für festkörperreiche Einbrennlacke, wobei das dort beschriebene Urethan-, Carboxyl- und Hydroxylgruppen aufweisende Polyesterharz eine Hydroxylzahl von 40 bis 110 und ein Urethangruppengehalt von 6,5 bis 11 Gew.-% aufweist. Derartige Polyester weisen eine relativ hohe Klebrigkeit und unbefriedigende mechanische Festigkeit auf und kommen aus diesem Grund für die erfindungsgemäßen Anwendungen nicht in Betracht.

Zur Kompostierung geeignete Vliesstoffe sind bekannt.

So beschreibt die EP-A-0 591 821 einen gebundenen Vliesstoff, der zur Kompostierung geeignet ist und als Binder 5 bis 100 Gew.-%, bezogen auf das Gewicht der eingesetzten Faser, eines Polymerisates, das eine Glastemperatur von -70 bis +40 °C aufweist und das herstellbar ist durch radikalische Polymerisation von ethylenisch ungesättigten Monomeren, enthaltend 0,5 bis 15 Gew.-% N-Alkylolamide von 3 bis 10 C-Atome aufweisenden α,β-monoethylenisch ungesättigten Carbonsäuren, Acrylamidoglykolsäuren, Methacrylamidoglycolsäure und/oder deren Ether, Ester oder Etherester mit Alkoholen mit bis zu 12 C-Atomen, in wäßrigem Medium in Gegenwart eines Saccharids, sowie deren Herstellung und Verwendung.

Eine biologisch abbaubare Folie oder ein biologisch abbaubarer ausgeformter Gegenstand, der hergestellt wird ausgehend von einer Zusammensetzung, die 100 Gewichtsteile Cellulosefasern mit einer Länge von 3 mm oder weniger und einem Durchmesser von 50 mm oder weniger, 10 bis 600 Gewichtsteile eines thermoplastischen Harzes und 2 bis 100 Gewichtsteile Chitosan enthält, wird in der DE-A-41 21 085 beschrieben. Als thermoplastische Harze werden Polyvinylalkohole, Polyurethane und aliphatische Polyester genannt. Auch hier weisen die so hergestellten biologisch abbaubaren Gegenstände in der Regel bedingt durch die verwendeten thermoplastischen Harze eine ungenügende mechanische Festigkeit auf und sind darüber hinaus häufig klebrig.

Ferner beschreibt die kanadische Patentanmeldung CA 2 057 669 als Bindemittel zum Imprägnieren oder Beschichten von faserigen Geweben verwendbare biologisch abbaubare aliphatische Polyester. Diese sind zwar, wie oben bereits kurz erwähnt, sehr gut biologisch abbaubar, weisen jedoch in der Regel ungenügende mechanische Eigenschaften und eine relativ schlechte Verarbeitbarkeit auf.

In Anbetracht des obigen Standes der Technik lag die Aufgabe der vorliegenden Erfindung in der Bereitstellung von wäßrigen Dispersionen von biologisch abbaubaren Polyestern, die gleichzeitig ausgezeichnete mechanische Eigenschaften und eine gute Verarbeitbarkeit aufweisen sollten. Darüber hinaus sollte die biologische Abbaubarkeit der verwendeten Copolyester und der damit behandelten Vliesstoffe, d.h. der Zeitpunkt, zu dem der Copolyester bzw. die Vliestoffe im'wesentlichen vollständig abgebaut ist, über einen langen Zeitraum hinweg variierbar sein.

Demgemäß betrifft die vorliegende Erfindung eine Polyester-dispersion enthaltend
(A) 20 bis 90 Gew.-% Wasser und
(B) 10 bis 80 Gew.-% eines biologisch abbaubaren Copolyesters (B), enthaltend Struktureinheiten, die sich sowohl von aliphatischen als auch aromatischen Carbonsäure(derivate)n ableiten,
   erhältlich durch Umsetzung eines Gemisches, das umfaßt:
   (a1) ein Gemisch, umfassend
      (a11) 20 bis 95 mol-% Adipinsäure oder eines esterbildenden Derivats davon oder eines Gemisches aus zwei oder mehr davon,
      (a12) 5 bis 80 mol-% Terephthalsäure oder eines esterbildenden Derivats davon oder eines Gemisches aus zwei oder mehr davon,
      (a13) 0 bis 10 mol-% einer sulfonatgruppenhaltigen Verbindung oder eines Gemisches aus zwei oder mehr davon,
      wobei die Summe der einzelnen mol-%-Angaben 100 beträgt,
   (a2) eine Dihydroxyverbindung oder einen Aminoalkohol oder ein Gemisch aus zwei oder mehr davon,
      wobei man das Molverhältnis von (a1) zu (a2) im Bereich von 0,4:1 bis 2,5:1 wählt,
   (a3)0,01 bis 10 Gew.-%, bezogen auf das Gemisch (a1), eines Kettenverlängerungsmittels aus der Gruppe der Diisocyanate, Divinylether und der 2,2'-Bisoxazoline der allgemeinen Formel (I) 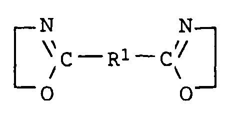 worin R¹ eine Einfachbindung, eine (CH₂)q-Alkylengruppe mit q = 2,3 oder 4 oder eine Phenylengruppe bedeutet oder eines Gemisches aus zwei oder mehr davon, und
   (a4) 0 bis 20 Gew.-%, bezogen auf das Gemisch (a1), einer Verbindung mit mindestens drei zur Esterbildung befähigten Gruppen oder eines Gemisches aus zwei oder mehr davon,
wobei
die von (a11) und (a12) abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und der Anteil der Komponenten (a13) und (a4) nicht gleichzeitig jeweils Null beträgt.

Der Begriff "biologisch abbaubar", wie er im Rahmen der vorliegenden Anmeldung verwendet wird, bezeichnet die Tatsache, daß die Copolyester unter Umwelteinflüssen in einer angemessenen und nachweisbaren Zeitspanne zerfallen. Dabei erfolgt der Abbau in der Regel hydrolytisch und/oder oxidativ, zum überwiegenden Teil jedoch durch Einwirkung von Mikroorganismen wie Bakterien, Hefen, Pilzen und Algen. Der Abbau kann jedoch auch enzymatisch erfolgen, wie z.B. von Y. Tokiwa und T. Suzuki in "Nature", Bd. 270, S. 76-78, 1977, beschrieben. Dabei ist es im Rahmen der vorliegenden Erfindung durch eine entsprechende Wahl des Verhältnisses zwischen wiederkehrenden Einheiten, die sich aus aliphatischen Carbonsäuren herleiten, und solchen, die sich aus aromatischen Carbonsäuren herleiten, möglich, die Geschwindigkeit des biologischen Abbaus, d.h. den Zeitpunkt, bis zu dem die erfindungsgemäß verwendeten Polyester im wesentlichen vollständig abgebaut sind, zu variieren. Dabei gilt als Faustregel, daß die Copolyester umso schneller biologisch abbaubar sind, je höher der Anteil an wiederkehrenden Einheiten, die sich von aliphatischen Carbonsäuren herleiten, ist. Ferner sind die Copolyester umso schneller biologisch abbaubar, je höher der Anteil an Abschnitten mit alternierender Abfolge von wiederkehrenden Einheiten, die sich von aliphatischen und aromatischen Carbonsäure(derivate)n ableiten, ist.

Die erfindungsgemäße Polyesterdispersion enthält ungefähr 10 bis ungefähr 80, vorzugsweise ungefähr 20 bis ungefähr 60 und insbesondere ungefähr 20 bis ungefähr 40 Gew.-% Feststoff, d.h. des erfindungsgemäß verwendeten Copolyesters.

Die im Rahmen der vorliegenden Erfindung verwendbare aliphatische Dicarbonsäure ist Adipinsäure.

Als esterbildende Derivate der Adipinsäure sind insbesondere die Di-C₁-C₆-Alkylester, wie z.B. Dimethyl-, Diethyl-, Dipropyl-, Dibutyl-, Dipentyl- und Dihexylester zu nennen.

Dabei kann die Adipinsäure oder esterbildende Derivate davon einzeln oder als Gemisch aus zwei oder mehr davon eingesetzt werden.

Der Anteil der Adipinsäure oder deren esterbildenden Derivaten beträgt im allgemeinen ungefähr 20 bis 95, vorzugsweise ungefähr 30 bis ungefähr 70 und insbesondere ungefähr 40 bis ungefähr 60 mol-%, jeweils bezogen auf die Gesamtmenge der Komponenten (a11) bis (a13).

Als aromatische Dicarbonsäure wird erfindungsgemäß Terephthalsäure sowie esterbildende Derivate davon verwendet. Dabei sind insbesondere die Di-C₁-C₆-Alkylester, wie z.B. Dimethyl-, Diethyl-, Dipropyl-, Dibutyl-, Dipentyl- oder Dihexylester zu nennen.

Die Terephthalsäure oder deren esterbildende Derivate (a12) können einzeln oder als Gemisch aus zwei oder mehr davon eingesetzt werden.

Der Anteil der Terephthalsäure oder esterbildenden Derivaten davon beträgt im allgemeinen ungefähr 5 bis ungefähr 80, vorzugsweise ungefähr 30 bis ungefähr 70 und insbesondere ungefähr 40 bis ungefähr 60 mol-%, jeweils bezogen auf die Gesamtmenge der Komponenten (a11) bis (a13).

Als sulfonatgruppenhaltige Verbindung (a13) setzt man im Rahmen der vorliegenden Erfindung üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulfoisophthalsäure oder deren Gemische, insbesondere das Natriumsalz. Der Anteil der sulfonatgruppenhaltigen Verbindung (a13) beträgt 0 bis ungefähr 10, vorzugsweise 0 bis ungefähr 5 und insbesondere ungefähr 3 bis ungefähr 5 mol-%, jeweils bezogen auf den Gesamtgehalt der Komponenten (a11) bis (a13).

Dabei können die sulfonatgruppenhaltigen Verbindungen einzeln oder als Gemisch aus zwei oder mehr davon eingesetzt werden.

Als Komponente (a2) werden erfindungsgemäß eine Dihydroxyverbindung oder ein Aminoalkohol oder ein Gemisch aus zwei oder mehr davon eingesetzt. Dabei sind prinzipiell alle bei der Esterherstellung bekannten Diole oder Aminoalkohole einsetzbar.

Im allgemeinen werden jedoch (a21) Alkandiole mit 2 bis 12 Kohlenstoffatomen, vorzugsweise 4 bis 6 Kohlenstoffatomen, oder Cycloalkandiole mit 5 bis 10 Kohlenstoffatomen, (a22) Polyetherdiole, d.h. Ethergruppen enthaltende Dihydroxyverbindungen, und (a23) Aminoalkohole mit 2 bis 12 Kohlenstoffatomen, vorzugsweise 2 bis 4 Kohlenstoffatomen, sowie Aminocycloalkohole mit 5 bis 10 Kohlenstoffatomen eingesetzt.

Beispielshaft zu nennen sind Ethylenglykol, 1,2-, 1,3-Propandiol, 1,2-, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol); Cyclopentandiol, 1,4-Cyclohexandiol, 1,2-, 1,3- und 1,4-Cyclohexandimethanol und 2,2,4,4-Tetramethyl-1,3-cyclobutandiol;
Diethylenglykol, Triethylenglykol, Polyethylenglykol, Polypropylenglykol und Polytetrahydrofuran, insbesondere Diethylenglykol, Triethylenglykol und Polyethylenglykol, oder deren Gemische, oder Verbindungen, die eine unterschiedliche Anzahl von Ethereinheiten aufweisen, beispielsweise Polyethylenglykol, das Propyleneinheiten enthält und beispielsweise durch Polymerisation nach an sich bekannten Methoden von zuerst Ethylenoxid und anschließend Propylenoxid erhalten werden kann. Das Molekulargewicht (Mn) der einsetzbaren Polyethylenglykole beträgt in der Regel ungefähr 250 bis ungefähr 8.000, vorzugsweise ungefähr 600 bis ungefähr 3.000 g/mol;
4-Aminomethylcyclohexanmethanol, 2-Aminoethanol, 3-Aminopropanol, 4-Aminobutanol, 5-Aminopentanol, 6-Aminohexanol; Aminocyclopentanol und Aminocyclohexanol;
oder deren Gemische.

Dabei können die Dihydroxyverbindungen oder Aminoalkohole einzeln oder als Gemisch aus zwei oder mehr davon eingesetzt werden.

Das Molverhältnis von (a1) zu (a2) wird im allgemeinen im Bereich von ungefähr 0,4:1 bis ungefähr 2,5:1, vorzugsweise im Bereich von ungefähr 0,5:1 bis ungefähr 1,5:1, weiter bevorzugt im Bereich von ungefähr 0,5:1 bis ungefähr 1,2:1 und insbesondere im Bereich von ungefähr 0,5:1 bis ungefähr 1:1, gewählt.

Das Molverhältnis von (a1) und (a2) im isolierten Copolyester beträgt nach dem Entfernen der gewünschten Menge an überschüssiger Komponente (a2) ungefähr 0,4:1 bis ungefähr 1,5:1, vorzugsweise ungefähr 0,5:1 bis ungefähr 1,2:1 und insbesondere ungefähr 0,5:1 bis ungefähr 1:1.

Als Kettenverlängerungsmittel (a3) können erfindungsgemäß Diisocyanate, Divinylether oder 2,2'-Bisoxagoline der Formel I eingesetzt werden. Deren Anteil liegt bei ungefähr 0,01 bis ungefähr 10, vorzugsweise bei ungefähr 0,05 bis ungefähr 5, weiter bevorzugt bei ungefähr 0,07 bis ungefähr 4 und insbesondere bei ungefähr 0,1 bis ungefähr 1 Gew.-%, jeweils bezogen auf das Gemisch (a1).

Unter den hier eingesetzten Kettenverlängerungsmitteln sind Diisocyanate, wie z.B. Toluylen-2,4-diisocyanat, Toluylen-2,6-diisocyanat, 4,4'- und 2,4'-Diphenylmethandiisocyanat, Naphthylen-1,5-diisocyanat, Xylylen-diisocyanat, Hexamethylendiisocyanat, Isophorondiisocyanat und Methylen-bis(4-isocyanatocyclohexan), insbesondere Hexamethylendiisocyanat; trifunktionelle Isocyanat-Verbindungen, die Isocyanurat- und/oder Biuretgruppen mit einer Funktionalität nicht kleiner als 3 enthalten können; Divinylether, wie z.B. 1,4-Butandiol-divinylether, 1,6-Hexandiol-divinylether und 1,4-Cyclohexandimethanol-divinylether; sowie 2,2'-Bisoxazoline der allgemeinen Formel (I) 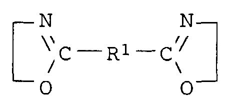 zu nennen.

Letztere sind im allgemeinen erhältlich durch das Verfahren aus Angew. Chem. Int. Edit., Vol. 11 (1972), S. 287-288. Als besonders bevorzugte Bisoxazoline sind solche, in denen R¹ eine Einfachbindung, eine (CH₂)_{q}-Alkylengruppe mit q = 2, 3 oder 4 wie Methylen, Ethan-1,2-diyl, Propan-1,3-diyl, Propan-1,2-diyl, Butan-1,4-diyl oder eine Phenylengruppe bedeutet, zu nennen. Insbesondere bevorzugt sind 2,2'-Bis(2-oxazolin), Bis(2-oxazolinyl)methan, 1,2-Bis(2-oxazolinyl)ethan, 1,3-Bis(2-oxazolinyl)propan, 1,4-Bis(2-oxazolinyl)butan, 1,4-Bis(2-oxazolinyl)benzol, 1,2-Bis(2-oxazolinyl)benzol und 1,3-Bis(2-oxazolinyl)benzol.

Dabei können die Kettenverlängerungsmittel (a3) auch als Gemisch aus zwei oder mehr davon eingesetzt werden.

Des weiteren kann erfindungsgemäß eine Verbindung mit mindestens drei zur Esterbildung befähigten Gruppen (a4) oder ein Gemisch aus zwei oder mehr davon eingesetzt werden, und zwar, sofern sie vorhanden sind, in einer Menge von ungefähr 0,01 bis ungefähr 20, vorzugsweise von ungefähr 1 bis ungefähr 10, weiter bevorzugt von ungefähr 3 bis ungefähr 7 und insbesondere von ungefähr 3 bis ungefähr 5 Gew-%, jeweils bezogen auf das Gemisch (a1).

Die als Verbindungen (a4) eingesetzten Verbindungen enthalten vorzugsweise 3 bis 10 funktionelle Gruppen, welche zur Ausbildung von Esterbindungen befähigt sind. Besonders bevorzugte Verbindungen (a4) besitzen 3 bis 6 funktionelle Gruppen dieser Art im Molekül, insbesondere 3 bis 6 Hydroxylgruppen und/oder Carboxylgruppen. Insbesondere bevorzugt werden tri- und/oder tetrafunktionelle Carbonsäuren oder Derivate davon eingesetzt. Beispielhaft seien genannt: Weinsäure, Zitronensäure, Äpfelsäure, Trimethylolpropan, Trimethylolethan, Pentaerythrit, Polyethertriole, Glycerin, Trimesinsäure, Trimellitsäure, -anhydrid, Pyromellitsäure, -dianhydrid und Hydroxyisophthalsäure.

Durch Zusatz der Kettenverlängerungsmittel (a3) und/oder der Verbindungen (a4) kann man beispielsweise die Schmelzviskosität, die Grenzviskositätszahl bzw. das Molekulargewicht in gewünschter Weise verändern, d.h. verglichen mit Polyestern, denen keine der Kettenverlängerungsmittel (a3) und/oder Verbindungen (a4) zugesetzt wurden, die Grenzviskositätszahl und das Molekulargewicht entsprechend erhöhen und so die mechanischen Eigenschaften der Polyester entsprechend der jeweiligen Anwendung variieren.

Dabei ist zu beachten, daß erfindungsgemäß stets mindestens eine Komponente (a13) und/oder (a4) vorhanden sein muß, damit der Copolyester über freie Säuregruppen verfügt.

In einer weiteren Ausführungsform betrifft die vorliegende Erfindung eine Polyesterdispersion enthaltend
(A) 20 bis 90 Gew.-% Wasser und
(B) 10 bis 80 Gew.-% eines biologisch abbaubaren Copolyesters (B1),
   enthaltend Struktureinheiten, die sich sowohl von aliphatischen als auch aromatischen Carbonsäure(derivate)n ableiten, erhältlich durch Umsetzung eines Gemisches, das umfaßt:
   (a1) ein Gemisch, umfassend
      (a11) 20 bis 95 mol-% Adipinsäure oder eines esterbildenden Derivats davon oder eines Gemisches aus zwei oder mehr davon,
      (a12) 5 bis 80 mol-% Terephthalsäure oder eines esterbildenden Derivats davon oder eines Gemisches aus zwei oder mehr davon,
      (a13) 0 bis 10 mol-% einer sulfonatgruppenhaltigen Verbindung oder eines Gemisches aus zwei oder mehr davon,
      wobei die Summe der einzelnen mol-%-Angaben 100 beträgt,
   (a2) eine Dihydroxyverbindung oder einen Aminoalkohol oder ein Gemisch aus zwei oder mehr davon,
      wobei man das Molverhältnis von (a1) zu (a2) im Bereich von 0,4:1 bis 2,5:1 wählt,
   (a3) 0 bis 10 Gew.-%, bezogen auf das Gemisch (a1), eines Kettenverlängerungsmittels aus der Gruppe der Diisocyanate, Divinylether und der 2,2'-Bisoxazoline der allgemeinen Formel (I) 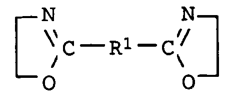 worin R¹ eine Einfachbindung, einen (CH2)q-Alkylengruppe mit q = 2, 3 oder 4 oder eine Phenylengruppe bedeutet oder eines Gemisches aus zwei oder mehr davon,
   (a4) 0 bis 20 Gew.-%, bezogen auf das Gemisch (a1), einer Verbindung mit mindestens drei zur Esterbildung befähigten Gruppen oder eines Gemisches aus zwei oder mehr davon,
   (b1) 0,01 bis 100 Gew.-%, bezogen auf das Gemisch (a1), einer Hydroxycarbonsäure (b1), die durch die folgenden Formeln IIa oder IIb definiert ist

      HO―[―C(O)―G―O―]pH (IIa)

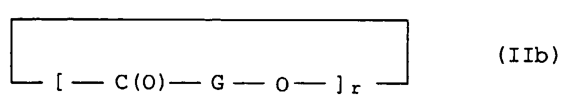

      in denen p eine ganze Zahl von 1 bis 1.500 und r 1, 2, 3 oder 4 bedeuten, und G für eine Phenylen-, -(CH₂)ₙ-, wobei n eine ganze Zahl von 1, 2, 3, 4 oder 5 bedeutet, eine -C(R)H- oder eine -C(R)HCH₂-Gruppe steht, wobei R Methyl oder Ethyl ist,
   oder eines Gemisches aus zwei oder mehr davon, wobei
   die von der (cyclo)aliphatischen und aromatischen Carbonsäure abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und der Anteil der Komponenten (a13) und (14) nicht gleichzeitig jeweils Null beträgt.

In obiger Formel beträgt p vorzugsweise 1 bis ungefähr 1000; r bedeutet vorzugsweise 1 oder 2; und n bedeutet vorzugsweise 1 oder 5.

Vorzugsweise beträgt der Gehalt an Hydroxycarbonsäure (b1) im zur Umsetzung gebrachten Gemisch ungefähr 0,1 bis 80 Gew.-%, bezogen auf das Gemisch (a1).

Vorzugsweise setzt man als Hydroxycarbonsäure (b1) Glykolsäure, D-, L-, D, L-Milchsäure, 6-Hydroxyhexansäure, deren cyclische Derivate wie Glycolid (1,4-Dioxan-2,5-dion), D-, L-Dilactid (3,6-Dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie ein Gemisch aus 3-Polyhydroxybuttersäure und Polyhydroxyvaleriansäure (letzteres ist unter dem Namen Biopol® von Zeneca erhältlich) ein, wobei die oben definierten niedermolekularen und cyclischen Derivate eingesetzt werden.

Selbstverständlich kann man auch Gemische aus zwei oder mehr der oben definierten Hydroxycarbonsäuren einsetzen.

In einer weiteren Ausführungsform werden unter Verwendung der cyclischen Derivate der oben beschriebenen Hydroxycarbonsäuren (b1) bei der Umsetzung mit dem erfindungsgemäß verwendeten biologisch abbaubaren Copolyester durch eine sogenannte "ringöffnende Polymerisation" in an sich bekannter Weise Copolyester der oben definierten Art erhalten, die Blockstrukturen bestehend aus dem erfindungsgemäß verwendeten Copolyester (B), die über jeweils mindestens eine Hydroxycarbonsäure-Einheit (b1) miteinander verbunden sind, enthalten (zur "ringöffnenden Polymerisation" siehe Encyclopedia of Polymer Science and Engineering, Bd. 12, 2. Ed., John Wiley & Sons, 1988, S. 36-41).

Im Rahmen der vorliegenden Erfindung besonders bevorzugt verwendete Copolyester weisen die folgende Zusammensetzung bezüglich der Komponenten (a11), (a12) und (a2) auf, wobei zu berücksichtigen ist, daß diese Copolyester sowohl Sulfonsäuregruppen aufweisen können als auch die als Komponenten (a3) und (a4) definierten Kettenverlängerungsmittel und/oder Verbindungen enthalten. Die nach der jeweiligen Komponente in Klammern gesetzten Werte entsprechen dem Anteil dieser Komponente, ausgedrückt in mol-%:
Terephthalsäure (40) - Adipinsäure (60) - Butandiol (100),
Terephthalsäure (30) - Adipinsäure (70) - Butandiol (100).

Die erfindungsgemäß verwendeten Copolyester sind durch die folgenden Merkmale charakterisiert:

Sie weisen eine Viskositätszahl im Bereich von ungefähr 5 bis 450 ml/g, vorzugsweise ungefähr 50 bis ungefähr 350 ml/g, weiter bevorzugt ungefähr 100 bis ungefähr 350 ml/g und insbesondere ungefähr 200 bis ungefähr 350 ml/g, jeweils gemessen im o-Dichlorbenzol/Phenol (Gew.-Verhältnis 50/50) bei einer Konzentration von 0,5 Gew.-% Copolyester bei einer Temperatur von 25 °C, auf.

Ferner besitzt der erfindungsgemäß verwendete Copolyester sowohl Hydroxyl- als auch Carboxylendgruppen.

Die Hydroxylzahl der erfindungsgemäß verwendeten Copolyester beträgt 0 bis ungefähr 30, vorzugsweise 0 bis ungefähr 20 und insbesondere 0 bis ungefähr 10.

Bezüglich weiterer Details über die im Rahmen der vorliegenden Erfindung verwendbaren (cyclo)aliphatischen Dicarbonsäuren, aromatischen Dicarbonsäuren, Diole und/oder Aminoalkohole sowie der weiteren Komponenten (a3), (a4) und (b1) wird auf die eingangs bei der Diskussion des Standes der Technik genannten Patentanmeldungen der Anmelderin sowie die US 5 446 079 bzw. die parallele Anmeldung WO92/09654 verwiesen, deren Inhalt bezüglich der dort beschriebenen Copolyester und deren Herstellung durch Bezugnahme in die vorliegende Anmeldung miteinbezogen wird.

Dennoch soll im folgenden auf die Herstellung der erfindungsgemäß verwendeten Copolyester an sich kurz eingegangen werden.

Diese Herstellung von Polyestern ist grundsätzlich bekannt (Sorensen und Campbell, "Preparative Methods of Polymer Chemistry", Interscience Publishers, Inc., New York, 1961, S. 111-127; Encyclopedia of Polymer Science and Engineering, Bd. 12, 2. Ed., John Wiley & Sons, 1988, S. 1-75; Kunststoffhandbuch, Bd. 3/1, Carl Hanser Verlag, München, 1992, S. 15-23 (Herstellung von Polyestern) sowie in den vorstehend erwähnten Patentanmeldungen.

So kann man beispielsweise die Umsetzung von in (a1) enthaltenen Dimethylestern der Dicarbonsäuren (all/a12) mit der Komponente (a2) ("Umesterung") und ggf. der Komponenten (a13) und/oder (b1) bei Temperaturen im Bereich von ungefähr 160 bis ungefähr 230 °C in der Schmelze bei Atmosphärendruck, vorzugsweise unter Inertgasatmosphäre, durchführen.

Vorteilhaft wird bei der Herstellung des erfindungsgemäß verwendeten biologisch abbaubaren Copolyesters ein molarer Überschuß der Komponente (a2), bezogen auf die eingesetzten Dicarbonsäuren, verwendet, beispielsweise bis maximal zum ungefähr 2,5fachen, im allgemeinen bis zum ungefähr 1,5fachen.

Üblicherweise erfolgt die Herstellung des oben genannten Copolyesters unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li und Ca, vorzugsweise metallorganischen Verbindungen auf der Basis dieser Metalle wie Salze organischer Säuren, Alkoxide, Acetylacetonate und ähnliches, insbesondere auf Basis von Zn, Sn und Ti.

Die Umsetzung der Komponenten (a1), (a2) und ggf. (b1) wird in der Regel unter vermindertem Druck oder in einem Inertgasstrom, beispielsweise unter Stickstoff, bei weiterem Erhitzen auf eine Temperatur im Bereich von 180 bis 260 °C bis zum gewünschten Molekulargewicht unter Berücksichtigung des gewünschten Molverhältnisses der Carboxylendgruppen zu Hydroxylendgruppen durchgeführt. Anschließend können (a3) und/oder (a4) in der Regel bei Normaldruck bei einer Temperatur im Bereich von ungefähr 50 bis ungefähr 200°C vorzugsweise unter Inertgas zugegeben und die Umsetzung fortgeführt werden.

Um unerwünschte Abbau- und/oder Nebenreaktionen zu vermeiden, kann man in dieser Verfahrensstufe - falls erwünscht - auch Stabilisatoren zusetzen, wobei deren Gehalt so niedrig wie möglich eingestellt werden sollte und im allgemeinen bei 0,1 bis 200 ppm, bezogen auf den Copolyester, liegt. Solche Stabilisatoren sind z.B. Phosphor-Verbindungen, wie sie beispielsweise in der EP-A 13 461, der US 4 328 049 und den oben erwähnten Patentanmeldungen der Anmelderin beschrieben sind.

Demgemäß betrifft die vorliegende Erfindung auch ein Verfahren zur Herstellung der erfindungsgemäßen wäßrigen Polyester-Dispersion, das die folgenden Stufen umfaßt:
(i) Herstellung eines Copolyesters (B) in an sich bekannter Weise, durch Umsetzung eines Gemisches, das umfaßt:
   (a1) ein Gemisch, umfassend
      (a11) 20 bis 95 mol-% Adipinsäure oder eines esterbildenden Derivats davon oder eines Gemisches aus zwei oder mehr davon,
      (a12) 5 bis 80 mol-% Terephthalsäure oder eines Gemisches aus zwei oder mehr davon,
      (a13) 0 bis 10 mol-% einer sulfonatgruppenhaltigen Verbindung oder eines Gemisches aus zwei oder mehr davon,
      wobei die Summe der einzelnen mol-%-Angaben 100 mol-% beträgt,
   (a2) eine Dihydroxyverbindung oder einen Aminoalkohol oder ein Gemisch aus zwei oder mehr davon,
      wobei man das Molverhältnis von (a1) zu (a2) im Bereich von 0,4:1 bis 2,5:1 wählt,
   (a3)0,01 bis 10 Gew.-%, bezogen auf das Gemisch (a1), eines Kettenverlängerungsmittels aus der Gruppe der Diisocyanate, Divinylether und der 2,2'-Bisoxazoline der allgemeinen Formel (I) 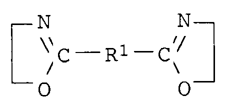 worin R¹ eine Einfachbindung, eine (CH₂)q-Alkylengruppe mit q = 2,3 oder 4 oder eine Phenylengruppe bedeutet oder eines Gemisches aus zwei oder mehr davon, und
   (a4) 0 bis 20 Gew.-%, bezogen auf das Gemisch (a1), einer Verbindung mit mindestens drei zur Esterbildung befähigten Gruppen oder eines Gemisches aus zwei oder mehr davon,
   wobei man die Umsetzung so durchführt, daß
   die von (a11) und (a12) abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist und wobei der Anteil der Komponenten (a13) und (a4) nicht gleichzeitig jeweils Null beträgt;
(ii) Neutralisieren und Dispergieren des so hergestellten Copolyesters (B) in einem wäßrigen Medium unter Verwendung eines geeigneten Neutralisationsmittels.

Ferner betrifft die vorliegende Erfindung ein Verfahren zur Herstellung der erfindungsgemäßen Polyesterdispersion, das die folgenden Stufen umfaßt:
(i) Herstellung eines Copolyesters (B1) in an sich bekannter Weise, durch Umsetzung eines Gemisches, das umfaßt:
   (a1) ein Gemisch, umfassend
      (a11) 20 bis 95 mol-% Adipinsäure oder eines esterbildenden Derivats davon oder eines Gemisches aus zwei oder mehr davon,
      (a12) 5 bis 80 mol-% Terephthalsäure oder eines Gemisches aus zwei oder mehr davon,
      (a13) 0 bis 10 mol-% einer sulfonatgruppenhaltigen Verbindung oder eines Gemisches aus zwei oder mehr davon,
      wobei die Summe der einzelnen mol-%-Angaben 100 beträgt,
   (a2) eine Dihydroxyverbindung oder einen Aminoalkohol oder ein Gemisch aus zwei oder mehr davon,
      wobei man das Molverhältnis von (a1) zu (a2) im Bereich von 0,4:1 bis 2,5:1 wählt,
   (a3) 0 bis 10 Gew.-%, bezogen auf das Gemisch (a1), eines Kettenverlängerungsmittels aus der Gruppe der Diisocyanate, Divinylether und der 2,2'-Bisoxazoline der allgemeinen Formel (I) 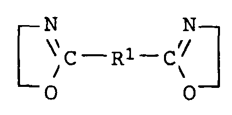 worin R¹ eine Einfachbindung, eine (CH₂)q-Alkylengruppe mit q = 2,3 oder 4 oder eine Phenylengruppe bedeutet oder eines Gemisches aus zwei oder mehr davon, und
   (a4) 0 bis 20 Gew.-%, bezogen auf das Gemisch (a1), einer Verbindung mit mindestens drei zur Esterbildung befähigten Gruppen oder eines Gemisches aus zwei oder mehr davon,
   (b1) 0,01 bis 100 Gew.-%, bezogen auf das Gemisch (a1), einer Hydroxycarbonsäure (b1), die durch die folgenden Formeln IIa oder IIb definiert ist

      HO―[―C(O)―G―O―]pH (IIa)

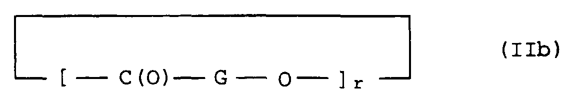

      in denen p eine ganze Zahl von 1 bis 1.500, und r 1, 2, 3 oder 4, bedeuten, und G für eine Phenylen-, -(CH₂)ₙ-, wobei n eine ganze Zahl von 1, 2, 3, 4 oder 5 bedeutet, eine -C(R)H- oder eine -C(R)HCH₂-Gruppe steht, wobei R Methyl oder Ethyl ist,
   oder eines Gemisches aus zwei oder mehr davon,
   und wobei man die Umsetzung so durchführt, daß
   die von der (cyclo)aliphatischeh und aromatischen Carbonsäure abgeleiteten wiederkehrenden Einheiten statistisch oder alternierend verteilt sind,
   der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und wobei der Anteil der Komponenten (a13) und (a4) nicht gleichzeitig jeweils Null beträgt;
(ii) Neutralisieren und Dispergieren des so hergestellten Copolyesters (B1) in einem wäßrigen Medium unter Verwendung eines geeigneten Neutralisationsmittels.

Dabei wird die Herstellung des Copolyesters B bzw. des Copolyesters B1 in den beiden erfindungsgemäßen Verfahren in Stufe (i) wie oben bereits ausführlich diskutiert durchgeführt.

Anschließend wird der gemäß Stufe (i) erhaltene Copolyester in der Regel noch als heiße Schmelze, die eine Temperatur im Bereich von ungefähr 150 bis ungefähr 230 °C aufweist, mit einer wäßrigen Lösung oder Dispersion eines Neutralisationsmittels versetzt. Dabei wird die Menge des zugefügten Neutralisationsmittels so gewählt, daß dieses in der Lage ist, die Säuregruppen teilweise bis vollständig zu neutralisieren, wobei "teilweise Neutralisation" im Kontext der vorliegenden Erfindung einen Neutralisationsgrad von ungefähr mindestens 70% der im Copolyester enthaltenen Carboxylgruppen bedeutet. Das Wasser wird in der Regel in einer solchen Menge zugegeben, daß eine wäßrige Polyesterdispersion mit einem Gehalt an Polyester von ungefähr 10 bis ungefähr 80 Gew.-%, vorzugsweise ungefähr 20 bis ungefähr 60 Gew.-%, entsteht. Das Neutralisationsmittel kann auch im Überschuß zugegeben werden.

Wie oben bereits ausgeführt, wird die Zugabe des Gemisches aus Wasser und einem Neutralisationsmittel in die Polyester-Schmelze bei Temperaturen der Schmelze im Bereich von ungefähr 150 bis ungefähr 230 °C, vorzugsweise bei Temperaturen von ungefähr 150 bis ungefähr 200 °C, vorgenommen. Eine Temperatur von 150 °C sollte jedoch nicht unterschritten werden, weil sonst die Gefahr besteht, daß keine feindisperse Verteilung des Polyesters in Wasser erhalten wird. Die Herstellung der wäßrigen Polyesterdispersion aus der Schmelze kann auch so erfolgen, daß man zunächst bis etwa zur Hälfte der erforderlichen Menge an Wasser langsam zugibt, dann das Neutralisationsmittel zufügt und erst zum Schluß die verbleibende Menge des Wassers zugibt. Bei der Zugabe von Wasser bzw. des Gemisches aus Wasser und dem Neutralisationsmittel zu der Schmelze sinkt die Temperatur derselben.

Nach Beendigung des Eintrags des Neutralisationsmittel/Wasser-Gemisches beträgt die Temperatur der so erhaltenen Polyester-Dispersion im allgemeinen ungefähr 70 bis ungefähr 100 °C. Die so erhaltene Polyester-Dispersion wird noch 2 bis 12, vorzugsweise 4 bis 6 Stunden, bei ggf. erhöhter Temperatur von bis zu 95 °C gerührt und anschließend auf Umgebungstemperatur abgekühlt.

Als Neutralisationsmittel können im allgemeinen alle herkömmlichen Neutralisationsmittel verwendet werden. Beispielshaft zu nennen sind Ammoniak, Triethylamin, Triethanolamin, Monoethanolamin, Diethanolamin, N-Methyldiethanolamin, Morpholin, N-Methylmorpholin, 2-Amino-2-methyl-1-propanol und Gemische aus zwei oder mehr davon. Vorzugsweise werden Monoethanolamin, Diethanolamin, N-Methylmorpholin, Methyldiethanolamin und Ammoniak verwendet. Ebenfalls verwendbar, jedoch weniger bevorzugt sind auch Alkalihydroxide wie beispielsweise Natrium- oder Kaliumhydroxid zu verwenden.

Ferner ist es möglich, nach Abschluß des Dispergierens einen Teil des Wassers wieder abzudestillieren, um einen möglichst hohen Gehalt an Feststoff zu erzielen.

Weiterhin kann nach Beendigung der Stufe (i) die erhaltene Schmelze zunächst mit einem geeigneten organischen Lösungsmittel, wie z.B. Methylethylketon, Tetrahydrofuran oder Aceton, versetzt werden und das Polymer darin gelöst, anschließend gemäß Stufe (ii) mit einem Neutralisationsmittel und Wasser zum Neutralisieren und Dispergieren versetzt und anschließend einer Vakuumdestillation unterzogen werden, um das organische Lösungsmittel, das mit Wasser mischbar oder zumindest dispergierbar sein sollte, ggf. zusammen mit überschüssigem Wasser wieder abzudestillieren.

Gemäß dem erfindungsgemäßen Verfahren werden wäßrige Polyesterdispersionen mit einem Feststoffgehalt von ungefähr 10 bis ungefähr 80 Gew.-%, vorzugsweise von ungefähr 20 bis ungefähr 60 Gew.-% erhalten.

Darüber hinaus betrifft die vorliegende Erfindung die Verwendung der oben beschriebenen Polyesterdispersionen als Bindemittel für biologisch abbaubare Vliesstoffe, als Beschichtungsmittel für Papier und als Spraymulch.

Dabei kommen als Material für die Faservliese Fasern in Betracht, die biologisch abbaubar sind. Es handelt sich dabei im allgemeinen um Fasern mit einem Durchmesser von ungefähr 0,002 bis ungefähr 0,1 mm, vorzugsweise ungefähr 0,01 bis ungefähr 0,05 mm, wobei der Durchmesser üblicherweise mit Hilfe von elektronenmikroskopischen Aufnahmen bestimmt werden kann.

Im allgemeinen werden natürliche Fasern cellulosischen Ursprungs, wie Viskosefasern oder Zellstoffasern oder synthetische Fasern, wie z.B. aliphatische Polyesterfasern, beispielsweise auf Basis von Copolymerisaten aus 3-Hydroxybutyrat, 3-Hydroxyvalerat und 4-Hydroxyvalerat, wie sie in EP-A 466 050 beschrieben sind, oder solche auf Basis von aliphatischen Dicarbonsäuren, wie z.B. Adipinsäure eingesetzt. Darüber hinaus können auch synthetische Fasern auf der Basis von aliphatisch-aromatischen Polyestern, wie sie im Rahmen der vorliegenden Anmeldung beschrieben werden, als Fasern verwendet werden.

Als Cellulosefasern kommen Fasern, die aus Cellulose, Hemicellulose oder Holz-Cellulose, erhalten aus Holz, Stroh, Baumwolle, Jute, Bambus oder Bagasse, erhalten worden sind, und Cellulose, die von Bakterien produziert worden ist, in Frage.

Die Formung von Faservliesen aus den Fasern ist allgemein bekannt und beispielsweise in Römpp, Chemie Lexikon, Georg Thieme Verlag, Stuttgart -New York, 9. Aufl., S. 4450, beschrieben. Es kann sich dabei um Wirrfaservliese oder bevorzugt gerichtete Faservliese ohne oder mit mechanischer Vorverfestigung, beispielsweise durch Nadeln, Verwirbeln oder Nähwirken, handeln.

Zum Binden der Faservliese werden ungefähr 5 bis 100, vorzugsweise ungefähr 11 oder mehr und insbesondere ungefähr 15 bis ungefähr 50, weiter bevorzugt ungefähr 20 bis ungefähr 35 Gew.-%, jeweils bezogen auf die eingesetzte Menge an Faservlies, des Copolyesters verwendet.

Die Verfestigung der Faservliese mit den Polyestern erfolgt nach bekannten Methoden (wie z.B. in Ullmann's Encyklopädie der technischen Chemie, 4. Aufl., Bd. 23, 1983, S. 738 bis 742 beschrieben). Üblicherweise wird das Faservlies durch Badimprägnieren, Schaumimprägnieren, Besprühen, Pflatschen oder Bedrucken mit der Polyesterdispersion in Kontakt gebracht bzw. getränkt. Dabei kann die Dispersion eventuell zusätzlich mit Wasser verdünnt oder aber mit üblichen Verdickungsmitteln verdickt werden, um die gewünschte Verarbeitungsviskosität einzustellen. Der Vliesbehandlung mit der Dispersion schließt sich im allgemeinen eine Trocknung und Temperung des erhaltenen Vliesstoffes an. Die Trocknungsbedingungen hängen von der Art des eingesetzten Trockners ab, üblicherweise liegt die Trocknungstemperatur zwischen 100 und 230 °C, und die Trocknung bzw. Temperung wird zwischen ungefähr 10 s und ungefähr 60 min lang durchgeführt.

Demgemäß betrifft die vorliegende Erfindung auch einen Vliesstoff enthaltend als Bindemittel 5 bis 100 Gew.-%, bezogen auf das Gewicht der eingesetzten Fasern, eines Copolyesters wie vorstehend definiert oder eines Copolyesters, hergestellt nach einem Verfahren wie vorstehend definiert.

In einer bevorzugten Ausführungsform enthält dieser Vliesstoff zusätzlich, bezogen auf 100 Gew.-Teile der verwendeten Faser, 2 bis 100 Gew.-% Chitosan.

Chitosan ist ein Produkt, das durch Deacetylierung von Chitin erhalten wird, das in Mycelium oder Krusten von Crustacea wie Krabben oder Hummer enthalten ist. Das Molekulargewicht und der Endacetylierungsgrad von Chitosan, das im Rahmen der vorliegenden Erfindung verwendet werden soll, sind nicht spezifisch eingeschränkt. Aus Gründen der Löslichkeit ist jedoch ein Endacetylierungsgrad von mindestens 60% erwünscht.

Wie oben bereits ausgeführt, beträgt die Menge an Chitosan 2 bis 100 Gew.-%, vorzugsweise 5 bis 80 Gew.-%, jeweils bezogen auf 100 Gew.-Teile der eingesetzten Fasern. Eine Menge des Chitosans, die außerhalb des vorgenannten Bereichs liegt, ist nicht vorteilhaft, weil die Naßfestigkeit niedrig wird. Die Menge des enthaltenen Binders von mindestens 5 Gew.-%, bezogen auf das Gewicht der eingesetzten Fasern, ist erforderlich, um dem Vlies die gewünschte Flexibilität zu verleihen. Untersuchungen an Vliesen, die ausschließlich mit Chitosan beschichtet bzw. verbunden worden waren, haben gezeigt, daß derartige Vliese überaus starr und demzufolge für viele Anwendungen nicht verwendbar waren.

Ferner betrifft die vorliegende Erfindung ein Verfahren zur Herstellung eines Vliesstoffs, wobei man die Fasern mit einer Polyesterdispersion, wie vorstehend definiert, oder einer Polyester-dispersion, hergestellt nach einem Verfahren wie vorstehend definiert, in einer solchen Menge in Kontakt bringt, daß der Gehalt des Copolyesters im gebundenen Vliesstoff 5 bis 100 Gew.-%, bezogen auf das Gewicht der eingesetzten Fasern, beträgt. Selbstverständlich können auch Gemische aus zwei oder mehr der obigen Polyesterdispersionen verwendet werden.

Zur Herstellung des erfindungsgemäßen Vliesstoffs, der zusätzlich als Bindemittel Chitosan enthält, wird im Rahmen des erfindungsgemäßen Verfahrens in einer weiteren Stufe eine wäßrige Lösung eines sauren Salzes von Chitosan hergestellt und diese entweder vor oder nach oder zusammen mit der wäßrigen Dispersion des Copolyesters mit den Fasern in Kontakt gebracht.

Nach Beendigung der Imprägnierungsstufe unter Inkontaktbringen wird der erhaltene Vliesstoff getrocknet.

Vor der Trocknung kann der so gewonnene Vliesstoff noch geformt werden, so daß auch ein Formkörper aus dem erfindungsgemäßen Vliesstoff hergestellt werden kann, der anschließend getrocknet wird. Zum Beispiel kann durch Ausbreiten des unmittelbar nach dem Verfahren erhaltenen Vliesstoffs auf einer geeigneten Oberfläche wie einer Glasplatte ein Formkörper in Form einer Folie oder eines Filmes erhalten werden.

Beim Durchführen des vorstehenden Verfahrens zur Herstellung der bevorzugten Ausführungsform des erfindungsgemäßen Vliesstoffs mit Chitosan ist es ratsam, Chitosan in Form eines sauren Salzes wie als Hydrochlorid oder als ähnliches anorganisches saures Salz oder Formiat, Acetat, Lactat oder als ähnliches organisches saures Salz verwendet werden.

Darüber hinaus können dem erfindungsgemäßen Vliesstoff ein oder mehrere Additive, wie z.B. ein Füllstoff oder ein Farbstoff oder ein Gemisch aus zwei oder mehr davon, zugegeben werden, wobei sowohl organische Füllstoffe, wie z.B. Stärke, als auch anorganische Füllstoffe, wie z.B. Siliciumdioxid, verwendet werden.

Die erfindungsgemäßen Vliesstoffe zeichnen sich durch ihre gute Kompostierbarkeit bei gleichzeitig günstigen Gebrauchseigenschaften, insbesondere hohe mechanische Festigkeit, aus. Sie weisen u.a. eine gute Trockenfestigkeit, eine hohe Naßfestigkeit und einen weichen Griff auf. Insbesondere bei der zusätzlichen Verwendung von Chitosan gemäß der bevorzugten Ausführungsform der erfindungsgemäßen Vliesstoffe ist es als überraschend anzusehen, daß durch den Zusatz einer Polyesterdispersion die Flexibilität des erhaltenen Vliesstoffs stark erhöht werden konnte.

Der erfindungsgemäße Vliesstoff kann als kompostierbare Folie, kompostierbarer Formkörper und zur Herstellung von Windeln oder Wischtüchern verwendet werden.

Die Erfindung soll nunmehr anhand von einigen Beispielen erläutert werden.

### Beispiele 1 bis 3 und Vergleichsbeispiel

### Allgemeines Verfahren der Polyesterherstellung

Zur Herstellung der Polyester B1, B2 und B3 wurden die in Tabelle 1 angegebenen aromatischen Dicarbonsäuren sowie Adipinsäure und eine Dihydroxyverbindung, wie in Tabelle 1 angegeben, zusammen mit 100 ppm Tetrabutylorthotitanat (TBOT) in ein Reaktionsgefäß eingebracht, wobei das Molverhältnis zwischen Alkoholkomponenten und Säurekomponente 1,85 betrug. Das Reaktionsgemisch wurde auf eine Temperatur zwischen 170 °C und 190 °C erhitzt und bei dieser Temperatur 3 bis 4 Stunden lang umgesetzt. Anschließend wurde die Temperatur auf 240 °C erhöht und die überschüssige Dihydroxyverbindung unter Vakuum abdestilliert. Die OH-Zahl des erhaltenen Copolyesters wurde bestimmt und durch Zusatz einer Dihydroxyverbindung auf 20 eingestellt.

### Allgemeines Verfahren zur Dispersionsherstellung

Die nach obiger allgemeiner Vorschrift hergestellten Polyester B1 bis B3 wurden in einem Reaktionsgefäß geschmolzen. Zu der erhaltenen Polyesterschmelze wurde eine der OH-Zahl entsprechende Menge an Pyromellitsäuredianhydrid (PMDA) zugegeben und bei 50 U/ min gerührt. Die Temperatur wurde langsam auf 180 °C erhöht und Hexamethylendiisocyamat (HDI) in 0,5 ml-Anteilen zugegeben. Das Drehmoment wurde gemessen. Sobald ein Drehmoment von 50 % (gemessen mit einem Laborrührer RE162 der Fa. Janke & Kunkel) erreicht war, wurden 300 ml Methylethylketon (MEK) in die Schmelze gegeben und anschließend das Polymer in MEK gelöst. Nach dem Abkühlen der Polymerlösung auf 40 °C wurden die Säuregruppen des Polyesters mit einer entsprechenden Menge Ethanolamin neutralisiert. Anschließend wurde die Lösung mit 1 1 Wasser versetzt und stark gerührt. Zu der gebildeten Dispersion wurden 200 ml Aceton gegeben. Abschließend wurde bei 60 °C unter Vakuum das Aceton und das MEK abdestilliert.

Mit diesen Dispersionen wurden Viskosevliesstoffe in einem Tauchbadverfahren imprägniert, 2 Minuten bei 150 °C getrocknet und anschließend deren anwendungstechnische Eigenschaften untersucht.

Die Ergebnisse dieser Untersuchungen und die Zusammensetzung des erhaltenen Copolyesters (ohne HDI und PMDA) sind in Tabelle 1 zusammengefaßt.

**Tabelle 1**

| | TS mol% | IS mol% | ADS mol% | BD mol% | DEG mol% | Rkr.tr N/50m m | Rkr.na β Nm |
|---|---|---|---|---|---|---|---|
| B1 | 40 | - | 60 | 100 | - | 38 | 13 |
| B2 | 35 | 5 | 60 | 85 | 15 | 33 | 14 |
| B3 | 30 | - | 70 | 100 | - | 29 | 12 |
| Acron al® DS23 31X (VB) | - | - | - | - | - | 39 | 13 |
| In der Tabelle bedeuten: - TS:: Terephtalsaüre; - IS:: Isophthalsäure; - ADS:: Adipinsäure; - BD:: Butandiol; - DEG:: Diethylenglykol; Acronal® DS2331X bezeichnet eine kommerziell erhältliche von BASF vertriebene Acrylatdispersion) ; - Rkr.tr.:: Reißkraft, trocken (gemessen nach DIN 53857); - Rkr.naß:: Reißkraft, naß (gemessen nach ISO 90733). | | | | | | | |

In den obigen Beispielen (B1 bis B3) betrug die Menge an aufgetragenem Copolyester als Bindemittel 33 Gew.-% bezogen auf die Menge des eingesetzten Vliesstoffes.

Die durch Behandlung mit der erfindungsgemäßen Dispersion verfestigten Vliesstoffe zeigten Trocken- und Naßfestigkeiten, die mit denen vergleichbar sind, die mit der Dispersion Acronal® DS2331X erreicht wurden, die aus Stärke und einem Polyacrylat besteht und demgemäß bezüglich des Polyacrylat-Anteils nicht bologisch abbaubar ist. Darüberhinaus weisen sie jedoch vorteilhafterweise biologische Abbaubarkeit auf.

Ferner wurde die biologische Abbaubarkeit der erfindungsgemäßen Polyesterdispersionen untersucht.

Dabei wurden folgende Tests durchgeführt:
- Folien-Kompostiertest
   Dazu wurden Polyesterfilme, die aus der Polyesterdispersion B2 durch Trocknung bei 80 °C hergestellt wurden mit einer Dicke von 50 µm bei 58 °C in ausgereiftem Kompost eingegraben und der Abbau der Filme visuell beurteilt.
   Der Film, der aus der Polyesterdispersion B2 hergestellt worden war, war nach 6 Wochen im Kompost bei 58 °C fast vollständig zersetzt.
- CO₂-Entwicklungstest bei 58 °C (entsprechend ISO 14852) und Aerober-Kompostiertest (entsprechend ISO/CD 14855)
   Die Dispersion B2 wurde im CO₂-Entwicklungstest bei 58 °C auf ihre biologische Abbaubarkeit hin untersucht. Bei diesem Test wurden das beim biologischen Abbau entstehende Kohlendioxid und die Biomassezunahme gemessen.
Die Dispersion B1 wurde im aeroben Kompostiertest auf ihre biologische Abbaubarkeit bzw. Kompostierbarkeit hin untersucht. Das beim biologischen Abbau entstandene Kohlendioxid wurde in diesem Test gemessen.

Die Ergebnisse aus beiden Tests sind in Tabelle 2 zusammengefaßt.

**Tabelle 2**

| | TS mol % | IS mol% | ADS mol% | BD mol% | DEG mol % | biologische Abbaubarkeit | Methode |
|---|---|---|---|---|---|---|---|
| B 2 | 35 | 5 | 60 | 85 | 15 | 87% (CO₂ + Biomasse) | CO₂-Entwicklungstest |
| B 1 | 40 | - | 60 | 100 | - | 76% CO₂ | aerober Kompostiertest |

Wie sich aus Tabelle 2 ergibt, wurden fast 90 % der eingesetzten Prüfsubstanz in CO₂ und Biomasse überführt.

## Patentansprüche

1. Polyesterdispersion enthaltend
(A) 20 bis 90 Gew.-% Wasser und
(B) 10 bis 80 Gew.-% eines biologisch abbaubaren freie Säuregruppen enthaltenden Copolyesters (B), enthaltend Struktureinheiten, die sich sowohl von aliphatischen als auch aromatischen Carbonsäure(derivate)n ableiten, erhältlich durch Umsetzung eines Gemisches, das umfaßt:
(a1) ein Gemisch, umfassend
(a11) 20 bis 95 mol-% Adipinsäure oder eines esterbildenden Derivats davon oder eines Gemisches aus zwei oder mehr davon,
(a12) 5 bis 80 mol-% Terephthalsäure oder eines esterbildenden Derivats davon oder eines Gemisches aus zwei oder mehr davon,
(a13) 0 bis 10 mol-% einer sulfonatgruppenhaltigen Verbindung oder eines Gemisches aus zwei oder mehr davon,
wobei die Summe der einzelnen mol-%-Angaben 100 beträgt,
(a2) eine Dihydroxyverbindung oder einen Aminoalkohol oder ein Gemisch aus zwei oder mehr davon,
wobei man das Molverhältnis von (a1) zu (a2) im Bereich von 0,4:1 bis 2,5:1 wählt,
(a3) 0,01 bis 10 Gew.-%, bezogen auf das Gemisch (a1), eines Kettenverlängerungsmittels aus der Gruppe der Diisocyanate, Divinylether und der 2,2'-Bisoxazoline der allgemeinen Formel (I) 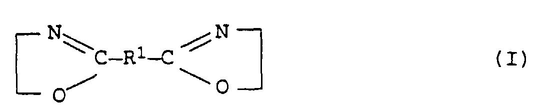 worin R¹ eine Einfachbindung eine (CH₂)_{q}-Alkylengruppe mit q = 2, 3 oder 4 oder eine Phenylengruppe bedeutet oder eines Gemisches aus zwei oder mehr davon, und
(a4) 0 bis 20 Gew.-%, bezogen auf das Gemisch (a1), einer Verbindung mit mindestens drei zur Esterbildung befähigten Gruppen oder eines Gemisches aus zwei oder mehr davon,
wobei
die von (a11) und (a12) abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25°C) aufweist, und der Anteil der Komponenten (a13) und (a4) nicht gleichzeitig jeweils Null beträgt.

2. Polyesterdispersion nach Anspruch 1, worin der Copolyester B als weitere Komponente
(b1) 0,01 bis 100 Gew.-%, bezogen auf das Gemisch (a1), einer Hydroxycarbonsäure (b1), die durch die folgenden Formeln IIa oder IIb definiert ist
HO―[―C(O)―G―O―]ₚH (IIa) 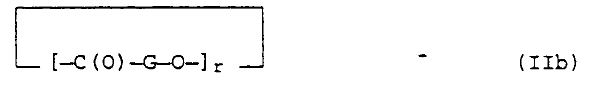
in denen p eine ganze Zahl von 1 bis 1.500, und r 1, 2, 3 oder 4 bedeuten, und G für eine Phenylen-, -(CH₂)ₙ-, wobei n eine ganze Zahl von 1, 2, 3, 4 oder 5 bedeutet, eine -C(R)H- oder eine -C(R)HCH₂-Gruppe steht, wobei R Methyl oder Ethyl ist,
oder eines Gemisches aus zwei oder mehr davon,
enthält.

3. Polyesterdispersionen nach Anspruch 1 oder 2, worin der Anteil der Komponente (a11) 40 bis 60 mol-% und der der Komponente (a12) 40 bis 60 mol-%, jeweils bezogen auf die Gesamtmenge der Komponenten (a11) bis (a13) beträgt.

4. Polyesterdispersionen nach den Ansprüchen 1 bis 3, worin (a2) 1,4-Butandiol ist.

5. Polyesterdispersionen nach den Ansprüchen 1 bis 4, worin (a3) Hexamethylendiisocyanat ist.

6. Verfahren zur Herstellung einer Polyesterdispersion gemäß Anspruch 1, das die folgenden Stufen umfaßt:
(i) Herstellung eines Copolyesters (B), wie in Anspruch 1 definiert, in an sich bekannter Weise, durch Umsetzung eines Gemisches, das umfaßt:
(a1) ein Gemisch, umfassend
(a11) 20 bis 95 mol-% Adipinsäure oder eines esterbildenden Derivats davon oder eines Gemisches aus zwei oder mehr davon,
(a12) 5 bis 80 mol-% Terephthalsäure oder eines esterbildenden Derivats davon oder eines Gemisches aus zwei oder mehr davon,
(a13) 0 bis 10 mol-% einer sulfonatgruppenhaltigen Verbindung oder eines Gemisches aus zwei oder mehr davon,
wobei die Summe der einzelnen mol-%-Angaben 100 beträgt,
(a2) eine Dihydroxyverbindung oder einen Aminoalkohol oder ein Gemisch aus zwei oder mehr davon,
wobei man das Molverhältnis von (a1) zu (a2) im Bereich von 0,4:1 bis 2,5:1 wählt,
(a3) 0,01 bis 10 Gew.-%, bezogen auf das Gemisch (a1), eines Kettenverlängerungsmittels aus der Gruppe der Diisocyanate, Divinylether und 2,2'-Bisoxazoline der 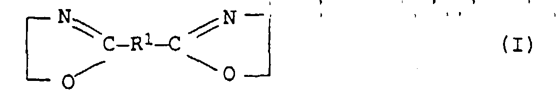 worin R¹ eine Einfachbindung, eine (CH₂)_{q}-Alkylengruppe mit q = 2, 3 oder 4 oder eine Phenylengruppe bedeutet oder eines Gemisches aus zwei oder mehr davon, und
(a4) 0 bis 20 Gew.-%, bezogen auf das Gemisch (a1), einer Verbindung mit mindestens drei zur Esterbildung befähigten Gruppen oder eines Gemisches aus zwei oder mehr davon,
und die Umsetzung so durchführt, daß die von (a11) und (a12) abgeleiteten wiederkehrenden Einheiten statistisch verteilt sind, der Copolyester eine Viskositätszahl im Bereich von 5 bis 450 ml/g (gemessen in o-Dichlorbenzol/ Phenol (Gew.-Verhältnis 50/50) bei einer Konzentration von 0,5 Gew.-% Copolyerster bei einer Temperatur von 25°C) aufweist, und wobei der Anteil der Komponenten (a13) und (a4) nicht gleichzeitig jeweils Null beträgt;
(ii) Neutralisieren und Dispergieren des so hergestellten Copolyesters (B) in einem wässrigen Medium unter Verwendung eines geeigneten Neutralisationsmittel.

7. Verfahren zur Herstellung einer Polyesterdispersion gemäß Anspruch 2, das die folgenden Stufen umfaßt:
(i) Herstellung eines Copolyesters (B1) wie in Anspruch 2 definiert, in an sich bekannter Weise, durch Umsetzung eines Gemisches, das umfaßt:
(a1) ein Gemisch, umfassend
(a11) 20 bis 95 mol-% Adipinsäure oder eines esterbildenden Derivats davon oder eines Gemisches aus zwei oder mehr davon,
(a12) 5 bis 80 mol-% Terephthalsäure oder eines esterbildenden Derivats davon oder eines Gemisches aus zwei oder mehr davon,
(a13) 0 bis 10 mol-% einer sulfonatgruppenhaltigen Verbindung oder eines Gemisches aus zwei oder mehr davon,
wobei die Summe der einzelnen mol-%-Angaben 100 beträgt,
(a2) eine Dihydroxyverbindung oder einen Aminoalkohol oder ein Gemisch aus zwei oder mehr davon,
wobei man das Molverhältnis von (a1) zu (a2) im Bereich von 0,4 bis 2,5:1 wählt,
(a3) 0,01 bis 10 Gew.-%, bezogen auf das Gemisch (a1), eines Kettenverlängerungsmittels aus der Gruppe der Diisocyanate, Divinylether und der 2,2'-Bisoxazoline der 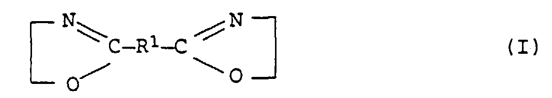 worin R¹ eine Einfachbindung, eine (CH₂)_{q}-Alkylengruppe mit q = 2, 3 oder 4 oder eine Phenylengruppe bedeutet oder eines Gemisches aus zwei oder mehr davon und
(a4) 0 bis 20 Gew.-%, bezogen auf das Gemisch (a1), einer Verbindung mit mindestens drei zur Esterbildung befähigten Gruppen oder eines Gemisches aus zwei oder mehr davon,
(b1) 0,01 bis 100 Gew.-%, bezogen auf das Gemisch (a1), einer Hydroxycarbonsäure (b1), die durch die folgenden Formeln IIa oder IIb definiert ist
HO―[―C(O)―G―O―]ₚH (IIa) 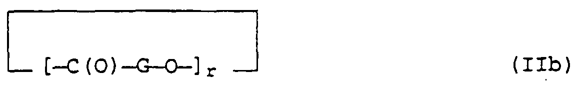
in denen p eine ganze Zahl von 1 bis 1.500, und r 1, 2, 3 oder 4 bedeuten, und G für eine Phenylen-, -(CH₂)ₙ-, wobei n eine ganze Zahl von 1, 2, 3, 4 oder 5 bedeutet, eine -C(R)H- oder eine -C-(R)HCH₂-Gruppe steht, wobei R Methyl oder Ethyl ist,
oder eines Gemisches aus zwei oder mehr davon, und die Umsetzung so durchführt, daß die von (a11) und (a12) abgeleiteten wiederkehrenden Einheiten statistisch oder alternierend verteilt sind,
der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25°C) aufweist, und wobei der Anteil der Komponenten (a13) und (a4) nicht gleichzeitig jeweils Null beträgt;
(ii) Neutralisieren und Dispergieren des so hergestellten Copolyesters (B1) in einem wäßrigen Medium unter Verwendung eines geeigneten Neutralisationsmittels.

8. Verfahren nach Anspruch 6 oder 7, wobei nach Stufe (i) der erhaltene Polyester in einem geeigneten organischen Lösungsmittel gelöst wird und dasselbe nach dem Neutralisieren und Dispergieren gemäß Stufe (ii) entfernt wird.

9. Verwendung einer Polyesterdispersion gemäß einem der Ansprüche 1 bis 5 oder einer Polyesterdispersion, hergestellt nach einem Verfahren gemäß einem der Ansprüche 6 bis 8, als Bindemittel für Vliesstoffe, zur Beschichtung von Papieren oder als Spraymulch.

10. Vliesstoff, enthaltend als Bindemittel 5 bis 100 Gew.-%, bezogen auf das Gewicht der eingesetzten Fasern, eines Copolyesters (B) oder eines Copolyesters (B1) oder eines Gemisches aus zwei oder mehr davon, wie in einem der Ansprüche 1 bis 5 definiert.

11. Vliesstoff nach Anspruch 10, der zusätzlich 2 bis 100 Gew.-%, bezogen auf 100 Gew.-Teile der eingesetzten Fasern, Chitosan enthält.

12. Verfahren zur Herstellung eines Vliesstoffs gemäß Anspruch 10, wobei man die Fasern mit einer Polyester-dispersion, wie in einem der Ansprüche 1 bis 5 definiert, oder einer Polyesterdispersion, hergestellt nach einem Verfahren gemäß einem der Ansprüche 6 bis 8, in einer solchen Menge in Kontakt bringt, daß der Gehalt des Copolyestes (B) oder des Copolyesters (B1) oder eines Gemisches aus zwei oder mehr davon im Vliesstoff 5 bis 100 Gew.-%, bezogen auf das Gewicht der eingesetzten Fasern, beträgt.

13. Verfahren zur Herstellung eines Vliesstoffs gemäß Anspruch 10, wobei die Fasern und die Polyesterdispersion, wie in Anspruch 12 definiert, in Kontakt gebracht werden und in einer weiteren Stufe eine wäßrige Lösung eines sauren Salzes von Chitosan hergestellt wird und diese vor oder nach oder zusammen mit der Polyesterdispersion in einer solchen Menge mit den Fasern in Kontakt gebracht wird, daß der Gehalt an Chitosan 2 bis 100 Gew.-%, bezogen auf die eingesetzte Menge an Fasern, beträgt.

14. Verwendung eines Vliesstoffs, wie in Anspruch 10 oder 11 definiert, oder eines Vliesstoffs, hergestellt nach einem Verfahren wie in Anspruch 12 oder 13 definiert, als kompostierbare Folie, kompostierbarer Formkörper, zur Herstellung von Windeln oder Wischtüchern.

## Claims

1. A polyester dispersion comprising
(A) from 20 to 90 % by weight of water, and
(B) from 10 to 80 % by weight of a biodegradable copolyester (B) containing free acid groups and structural units derived from both aliphatic and aromatic carboxylic acids or derivatives thereof,
obtainable by reaction of a mixture comprising
(a1) a mixture comprising
(a11) from 20 to 95 mol% of adipic acid or of an ester-forming derivative thereof or of a mixture of two or more thereof,
(a12) from 5 to 80 mol% of terephthalic acid or of an ester-forming derivative thereof or of a mixture of two or more thereof,
(a13) from 0 to 10 mol% of a sulfonate compound or of a mixture of two or more thereof,
the sum total of the individual mol %ages being 100,
(a2) a dihydroxy compound or an aminoalcohol or a mixture of two or more thereof,
the molar ratio of (a1) to (a2) being within the range from 0.4:1 to 2.5:1, (a3) from 0.01 to 10 % by weight, based on mixture (a1), of a chain extender from the group consisting of diisocyanates, divinyl ethers and the 2,2'-bisoxazolines of the formula (I) 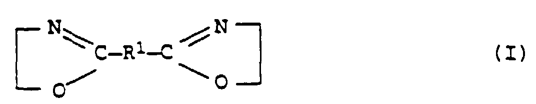 where R' is a single bond, a (CH₂)_{q}- alkylene group having q = 2, 3 or 4 or a phenylene group or of a mixture of two or more thereof, and
(a4) from 0 to 20 % by weight, based on mixture (a1), of a compound having at least three groups capable of ester formation or of a mixture of two or more thereof,
wherein
the repeat units derived from (a11) and (a12) form a random distribution, the copolyester has a viscosity number within the range from 5 to 450 ml/g (measured in 50/50 w/w o-dichlorobenzene/phenol at a concentration of 0.5 % by weight of copolyester at 25°C), and the proportions of components (a13) and (a4) are not zero at the same time.

2. A polyester dispersion as claimed in claim 1, wherein the copolyester B contains as further component
(b1) from 0.01 to 100 % by weight, based on mixture (a1), of a hydroxycarboxylic acid (b1) defined by the following formulae IIa or IIb
HO―[―C(O)―G―O_]ₚH (IIa) 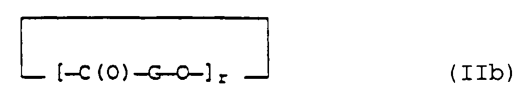
where p is an integer from 1 to 1500, r is 1, 2, 3 or 4, and G is phenylene, -(CH₂)ₙ-, where n is 1, 2, 3, 4 or 5, -C(R)H- or -C(R)HCH₂-, where R is methyl or ethyl,
or of a mixture of two or more thereof

3. A polyester dispersion as claimed in claim 1 or 2, wherein the proportion of component (a11) is from 40 to 60 mol%, and that of component (a12) is from 40 to 60 mol%, based in each case on the total amount of components (a11) to (a13).

4. A polyester dispersion as claimed in claims 1 to 3, wherein (a2) is 1,4-butanediol.

5. A polyester dispersion as claimed in claims 1 to 4, wherein (a3) is hexamethylene diisocyanate.

6. A process for preparing a polyester dispersion as claimed in claim 1, which comprises
(i) preparing a copolyester (B) as defined in claim 1 in a conventional manner by reacting a mixture comprising
(a1) a mixture comprising
(a11) from 20 to 95 mol% of adipic acid or of an ester-forming derivative thereof or of a mixture of two or more thereof,
(a12) from 5 to 80 mol% of terephthalic acid or of an ester-forming derivative thereof or of a mixture of two or more thereof,
(a13) from 0 to 10 mol% of a sulfonate compound or of a mixture of two or more thereof,
the sum total of the individual mol %ages being 100,
(a2) a dihydroxy compound or an aminoalcohol or a mixture of two or more thereof,
the molar ratio of (a1) to (a2) being within the range from 0.4:1 to 2.5:1,
(a3) from 0.01 to 10 % by weight, based on mixture (a1), of a chain extender from the group consisting of diisocyanates, divinyl ethers and the 2,2'-bisoxazolines of the formula (I) 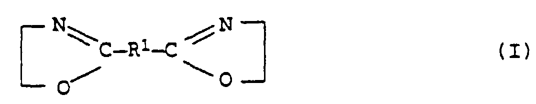 where R' is a single bond, a (CH₂)_{q}-alkylene group having q = 2, 3 or 4 or a phenylene group or of a mixture of two or more thereof, and
(a4) from 0 to 20 % by weight, based on mixture (a1), of a compound having at least three groups capable of ester formation or of a mixture of two or more thereof,
and performing the reaction in such a way that the repeat units derived from (a11) and (a12) form a random distribution, the copolyester has a viscosity number within the range from 5 to 450 ml/g (measured in 50/50 w/w o-dichlorobenzene/phenol at a concentration of 0.5 % by weight of copolyester at 25°C), and the proportions of components (a13) and (a4) are not zero at the same time;
(ii) neutralizing and dispersing the resulting copolyester (B) in an aqueous medium using a suitable neutralizer.

7. A process for preparing a polyester dispersion as claimed in claim 2, which comprises
(i) preparing a copolyester (B1) as defined in claim 2 in a conventional manner by reacting a mixture comprising
(a1) a mixture comprising
(a11) from 20 to 95 mol% of adipic acid or of an ester-forming derivative thereof or of a mixture of two or more thereof,
(a12) from 5 to 80 mol% of terephthalic acid or of an ester-forming derivative thereof or of a mixture of two or more thereof,
(a13) from 0 to 10 mol% of a sulfonate compound or of a mixture of two or more thereof,
the sum total of the individual mol %ages being 100,
(a2) a dihydroxy compound or an aminoalcohol or a mixture of two or more thereof,
the molar ratio of (a1) to (a2) being within the range from 0.4:1 to 2.5:1,
(a3) from 0.01 to 10 % by weight, based on mixture (a1), of a chain extender from the group consisting of diisocyanates, divinyl ethers and the 2,2'-bisoxazolines of the formula (I) 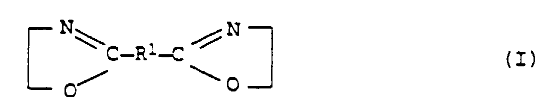 where R' is a single bond, a (CH₂)_{q}-alkylene group having q = 2, 3 or 4 or a phenylene group or of a mixture of two or more thereof,
(a4) from 0 to 20 % by weight, based on mixture (a1), of a compound having at least three groups capable of ester formation or of a mixture of two or more thereof,
(b1) from 0.01 to 100 % by weight, based on mixture (a1), of a hydroxycarboxylic acid (b1) defined by the following formulae IIa or IIb
HO―[―C(O)―G―O―]ₚH (IIa) 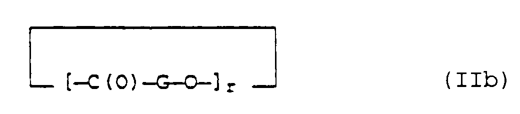
where p is an integer from 1 to 1500, r is 1, 2, 3 or 4, and G is phenylene, -(CH₂)ₙ-, where n is 1, 2, 3, 4 or 5, -C(R)H- or -C(R)HCH₂-, where R is methyl or ethyl,
or of a mixture of two or more thereof,
and performing the reaction in such a way that the repeat units derived from (a11) and (a12) form a random or alternating distribution, the copolyester has a viscosity number within the range from 5 to 450 ml/g (measured in 50/50 w/w o-dichlorobenzene/phenol at a concentration of 0.5 % by weight of copolyester at 25°C), and the proportions of components (a13) and (a4) are not zero at the same time;
(ii) neutralizing and dispersing the resulting copolyester (B1) in an aqueous medium using a suitable neutralizer.

8. A process as claimed in claim 6 or 7, further comprising dissolving the polyester obtained after step (i) in a suitable organic solvent and removing the same after the neutralizing and dispersing of step (ii).

9. The use of a polyester dispersion as claimed in any of claims 1 to 5 or of a polyester dispersion prepared by a process as claimed in any of claims 6 to 8, as a binder for nonwovens, for coating of papers or as a spray mulch.

10. A nonwoven comprising a binder comprising from 5 to 100 % by weight, based on the weight of the fibers used, of a copolyester (B) or of a copolyester (B1) or of a mixture of two or more thereof as defined in any of claims 1 to 5.

11. A nonwoven as claimed in claim 10, further comprising from 2 to 100 % by weight, based on 100 parts by weight of the fibers used, of chitosan.

12. A process for producing a nonwoven as claimed in claim 10, which comprises contacting the fibers with a polyester dispersion as defined in any of claims 1 to 5 or a polyester dispersion prepared by a process as claimed in one of claims 6 to 8 in such an amount that the level of copolyester (B) or of copolyester (B1) or of a mixture of two or more thereof in the nonwoven is from 5 to 100 % by weight, based on the weight of the fibers used.

13. A process for preparing a nonwoven as claimed in claim 10, which comprises contacting the fibers and the polyester dispersion as defined in claim 12 and, in a further step, preparing an aqueous solution of an acidic salt of chitosan and contacting this solution with the fibers before or after or together with the polyester dispersion in such an amount that the level of chitosan is from 2 to 100 % by weight, based on the amount of fibers used.

14. The use of a nonwoven as defined in claim 10 or 11 or of a nonwoven produced by a process as defined in claim 12 or 13, as a compostable film, as a compostable molding or for manufacturing diapers or wipes.

## Revendications

1. Dispersion de polyester contenant
(A) 20 à 90% en poids d'eau, et
(B) 10 à 80% en poids d'un copolyester (B) biodégradable contenant des groupes acide libres et contenant des unités structurales qui dérivent d'acides carboxyliques (dérivés) aussi bien aliphatiques qu'aromatiques, que l'on peut obtenir par réaction d'un mélange qui comprend :
(a1) un mélange, comportant
(a11) 20 à 95 moles % d'acide adipique ou d'un dérivé estérogène de celui-ci ou d'un mélange de deux ou de plusieurs d'entre eux,
(a12) 5 à 80 moles % d'acide téréphtalique ou d'un dérivé estérogène de celui-ci ou d'un mélange de deux ou de plusieurs d'entre eux,
(a13) 0 à 10 moles % d'un composé contenant des groupes sulfonate ou d'un mélange de deux ou de plusieurs de ces composés,
la somme des différentes indications en moles % étant de 100,
(a2) un composé dihydroxy ou un aminoalcool ou un mélange de deux ou de plusieurs d'entre eux,
le rapport entre (a1) et (a2) étant choisi dans la gamme de 0,4/1 à 2,5/1,
(a3) 0,01 à 10% en poids, par rapport au mélange (a1), d'un agent d'allongement de chaîne du groupe des diisocyanates, des éthers divinyliques et des 2,2'-bisoxazolines de la formule générale (I) : 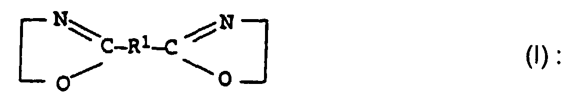 dans laquelle R¹ représente une simple liaison, un groupe (CH₂)_{q}-alkylène avec q = 2, 3 ou 4, ou un groupe phénylène, ou d'un mélange de deux ou de plusieurs d'entre eux, et
(a4) 0 à 20% en poids, par rapport au mélange (a1), d'un composé comportant au moins trois groupes susceptibles de former des esters ou d'un mélange de deux ou plusieurs de ces composés,
les unités répétitives dérivées de (a11) et (a12) étant distribuées de manière statistique, le copolyester présentant un indice de viscosité de l'ordre de 5 à 450 ml/g (mesuré dans du o-dichlorobenzène/phénol (rapport pondéral de 50/50) à une concentration de 0,5% en poids de copolyester et à une température de 25°C), la fraction de chacun des composants (a13) et (a4) n'étant pas simultanément égale à zéro.

2. Dispersion de polyester suivant la revendication 1, dans laquelle le copolyester B contient,
comme autres composants,
(b1) 0,01 à 100% en poids, par rapport au mélange (a1), d'un acide hydroxycarboxylique (b1) qui est défini par les formules suivantes lla ou llb,
HO―[―C(O)―G―O―]ₚH (IIa) 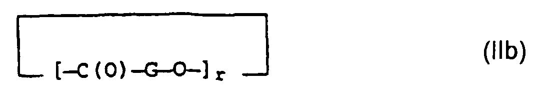
dans lesquelles p représente un nombre entier de 1 à 1.500 et r 1, 2, 3 ou 4, et G représente un groupe phénylène, -(CH₂)ₙ-, où n représente un nombre entier de 1, 2, 3, 4 ou 5, un groupe -C(R)H- ou un groupe -C(R)HCH₂-, où R est du méthyle ou de l'éthyle,
ou d'un mélange de deux ou de plusieurs d'entre eux.

3. Dispersions de polyester suivant l'une des revendications 1 et 2, dans lesquelles la fraction des composants (a11) est de 40 à 60 moles % et celle des composants (a12) de 40 à 60 moles %, chaque fois par rapport à la quantité totale des composants (a11 ) à (a13).

4. Dispersions de polyester suivant l'une des revendications 1 à 3, dans lesquelles (a2) est du 1,4-butanediol.

5. Dispersions de polyester suivant l'une des revendications 1 à 4, dans lesquelles (a3) est du diisocyanate d'hexaméthylène.

6. Procédé de préparation d'une dispersion de polyester suivant la revendication 1, caractérisé en ce qu'il comprend les étapes suivantes :
(i) une préparation d'un copolyester (B), tel que défini dans la revendication 1, d'une manière connue en soi, par réaction d'un mélange, qui comporte :
(a1) un mélange comprenant
(a11) 20 à 95 moles % d'acide adipique ou d'un dérivé estérogène de celui-ci ou d'un mélange de deux ou de plusieurs d'entre eux,
(a12) 5 à 80 moles % d'acide téréphtalique ou d'un dérivé estérogène de celui-ci ou d'un mélange de deux ou de plusieurs d'entre eux,
(a13) 0 à 10 moles % d'un composé contenant des groupes sulfonate ou d'un mélange de deux ou de plusieurs d'entre eux,
la somme des différentes indications en moles % étant de 100,
(a2) un composé dihydroxy ou un aminoalcool ou un mélange de deux ou de plusieurs de ces composés,
le rapport molaire entre (a1) et (a2) étant choisi dans la gamme de 0,4/1 à 2,5/1,
(a3) 0,01 à 10% en poids, par rapport au mélange (a1), d'un agent d'allongement de chaîne du groupe des diisocyanates, des éthers divinyliques et des 2,2'-bisoxazolines de la formule générale (I) : 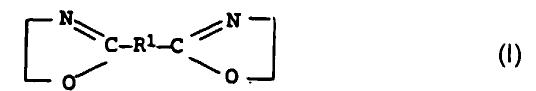 dans laquelle R¹ représente une simple liaison, un groupe -(CH₂)_{q}-alkylène avec q = 2, 3 ou 4 ou un groupe phénylène, ou un mélange de deux ou de plusieurs d'entre eux, et
(a4) 0 à 20% en poids, par rapport au mélange (a1), d'un composé comportant au moins trois groupes susceptibles de former des esters ou d'un mélange de deux ou de plusieurs de ces composés,
la réaction étant effectuée de façon que les unités répétitives dérivées de (a11) et (a12) soient distribuées de manière statistique, le copolyester présentant un indice de viscosité de l'ordre de 5 à 450 ml/g (mesuré dans du o-dichlorobenzène/phénol (rapport pondéral de 50/50) à une concentration de 0,5% en poids de copolyester pour une température de 25°C), la fraction de chacun des composants (a13) et (a4) n'étant pas simultanément égale à zéro,
(ii) une neutralisation et une dispersion du copolyester (B) ainsi préparé dans un milieu aqueux, avec une utilisation d'un agent de neutralisation approprié.

7. Procédé de préparation d'une dispersion de polyester suivant la revendication 2, qui comprend les étapes suivantes :
(i) une préparation d'un copolyester (B1) tel que défini dans la revendication 2, d'une manière connue en soi, par réaction d'un mélange, qui comporte :
(a1) un mélange, comprenant
(a11) 20 à 95 moles % d'acide adipique ou d'un dérivé estérogène de ce dernier ou d'un mélange de deux ou de plusieurs d'entre eux,
(a12) 5 à 80 moles % d'acide téréphtalique ou d'un dérivé estérogène de ce dernier ou d'un mélange de deux ou de plusieurs d'entre eux,
(a13) 0 à 10 moles % d'un composé contenant des groupes sulfonate ou d'un mélange de deux ou de plusieurs de ces composés,
la somme des différentes indications en moles % étant de 100,
(a2) un composé dihydroxy ou un aminoalcool ou un mélange de deux ou de plusieurs d'entre eux,
le rapport molaire entre (a1) et (a2) étant choisi dans la gamme de 0,4 à 2,5/1,
(a3) 0,01 à 10% en poids, par rapport au mélange (a1), d'un agent d'allongement de chaîne du groupe des diisocyanates, des éthers divinyliques et des 2,2'-bisoxazolines de la formule générale (I) : 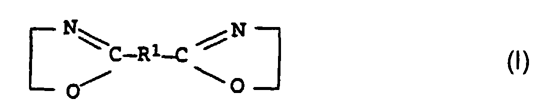 dans laquelle R¹ représente une simple liaison, un groupe -(CH₂)_{q}-alkylène avec q = 2, 3 ou 4, ou un groupe phénylène, ou d'un mélange de deux ou de plusieurs d'entre eux, et
(a4) 0 à 20% en poids, par rapport au mélange (a1), d'un composé comportant au moins trois groupes susceptibles de former des esters ou d'un mélange de deux ou de plusieurs de ces composés,
(b1) 0,01 à 100% en poids, par rapport au mélange (a1), d'un acide hydroxycarboxylique (b1), qui est défini par les formules lla ou llb suivantes :
HO―[―C(O)―G―O―]ₚH (IIa) 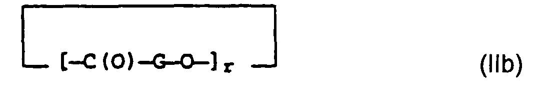
dans lesquelles p représente un nombre entier de 1 à 1.500 et r 1, 2, 3 ou 4, et G représente un groupe phénylène -(CH₂)ₙ-, où n est un nombre entier de 1,2, 3, 4 ou 5, un groupe -C(R)H- ou un groupe -C(R)HCH₂-, où R est un méthyle ou un éthyle,
ou d'un mélange de deux ou de plusieurs d'entre eux,
la réaction étant effectuée de façon que les unités répétitives dérivées de (a11) et de (a12) soient distribuées de manière statistique ou alternée,
le copolyester présentant un indice de viscosité de l'ordre de 5 à 450 ml/g (mesuré dans du o-dichlorobenzène/phénol (rapport pondéral de 50/50) à une concentration de 0,5% en poids de copolyester pour une température de 25°C), la fraction de chacun des composants (a13) et (a4) n'étant pas simultanément égale à zéro,
(ii) une neutralisation et une dispersion du copolyester ainsi préparé (B1) dans un milieu aqueux, avec une utilisation d'un agent de neutralisation approprié.

8. Procédé suivant l'une des revendications 6 et 7, dans lequel, après l'étape (i), le polyester obtenu est dissous dans un solvant organique approprié et celui-ci est éliminé après la neutralisation et la dispersion selon l'étape (ii).

9. Utilisation d'une dispersion de polyester suivant l'une des revendications 1 à 5 ou d'une dispersion de polyester, préparée selon un procédé suivant l'une des revendications 6 à 8, comme liant pour des matières non tissées, pour le couchage de papiers, ou comme paillis.

10. Matière non tissée, contenant comme liant 5 à 100% en poids, par rapport au poids des fibres mises en oeuvre, d'un copolyester (B) ou d'un copolyester (B1), telle que définie dans une des revendications 1 à 5, ou d'un mélange de deux ou de plusieurs d'entre eux.

11. Matière non tissée suivant la revendication 10, qui contient en supplément 2 à 100% en poids de chitosan, par rapport à 100 parties en poids des fibres mises en oeuvre.

12. Procédé de préparation d'une matière non tissée suivant la revendication 10, dans lequel les fibres sont mises en contact avec une dispersion de polyester, telle que définie dans une des revendications 1 à 5, ou avec une dispersion de polyester préparée selon un procédé suivant l'une des revendications 6 à 8, en une quantité telle que la teneur du copolyester (B) ou du copolyester (B1) ou d'un mélange de deux ou de plusieurs d'entre eux dans la matière non tissée est de 5 à 100% en poids, par rapport au poids des fibres mises en oeuvre.

13. Procédé de préparation d'une matière non tissée suivant la revendication 10, dans lequel les fibres et la dispersion de polyester, telles que définies dans la revendication 12, sont mises en contact et dans lequel, dans une autre étape, une solution aqueuse d'un sel acide de chitosan est préparée, celle-ci étant, avant ou après ou conjointement à la dispersion de polyester, mise en contact avec les fibres en une quantité telle que la teneur en chitosan est de 2 à 100% en poids, par rapport à la quantité de fibres mises en oeuvre.

14. Utilisation d'une matière non tissée, telle que définie dans la revendication 10 ou 11, ou d'une matière non tissée, préparée suivant un procédé tel que défini dans la revendication 12 ou 13, comme feuille compostable, corps façonné compostable, pour la fabrication de langes ou de torchons.
